# EUROPEAN PATENT SPECIFICATION

(11) **EP 3 411 136 B1**
(45) Date of publication and mention of the grant of the patent: **01.06.2022**
(21) Application number: 17701128.5
(22) Date of filing: 24.01.2017
(51) Int. Cl.: B01J 8/36, B01J 6/00, C10L 9/08

(54) **METHOD FOR TORREFYING BIOMASS**
VERFAHREN ZUR TORREFIZIERUNG VON BIOMASSE
PROCÉDÉ DE TORRÉFACTION DE BIOMASSE

(30) Priority: 01.02.2016 EP 16020026
(43) Date of publication of application: 12.12.2018
(73) Proprietor: Klinkenberg Zaanstad B.V., 1561 PS Krommenie (NL)
(72) Inventor: BOURGONJE, Zeger Cornelis, 1735 GV 't Veld (NL); DE GRAAFF, Mario, 1561 PS Krommenie (NL); JANSMA, Willem Jan, 1561 PS Krommenie (NL); CORNELISSEN, Reinerus Louwrentius, 7411 CC Deventer (NL); VAN RENS, Gerardus Leonardus Michiel Aimé, 7411 CC Deventer (NL)
(74) Representative: EDP Patent Attorneys B.V.
(86) International application number: PCT/EP2017/051349
(87) International publication number: WO 2017/133917

(56) References cited:
- WO-A1-2009/151367
- WO-A1-2012/102617
- WO-A1-2012/158116
- WO-A2-2011/112526
- US-A1- 2011 252 698
- CONGWEI WANG ET AL: "Oxidative torrefaction of biomass residues and densification of torrefied sawdust to pellets", BIORESOURCE TECHNOLOGY., vol. 127, 1 January 2013 (2013-01-01), pages 318-325, XP055263464, GB ISSN: 0960-8524, DOI: 10.1016/j.biortech.2012.09.092
- YASH JOSHI ET AL: "Packed-Bed Torrefaction of Bagasse under Inert and Oxygenated Atmospheres", ENERGY & FUELS., vol. 29, no. 8, 20 August 2015 (2015-08-20), pages 5078-5087, XP055263467, WASHINGTON, DC, US. ISSN: 0887-0624, DOI: 10.1021/acs.energyfuels.5b00779

## Description

The present invention relates to a method for torrefying biomass.

Torrefaction is a thermal treatment of biomass, whereby biomass, containing various amounts of unbound, chemically bound and physically bound water is thermally treated to expel this water, to expel light gaseous molecules, typically with <5 carbon atoms per molecule released, and to subsequently thermally decompose the major part of hemicellulose present in the biomass, as well as some of the lignin and cellulose present in the biomass.

It can be considered a mild form of carbonisation or slow pyrolysis.

This treatment is done to improve the properties of biomass. Untreated biomass is difficult to store because it is susceptible to biological activity, in other words decomposition. It is also, due to its fibrous nature, difficult to mill, requiring a large input of milling energy, and therefore difficult and expensive to convert into a homogenised product that may be compressed into pellets or briquettes or otherwise used in an industrial application.

Untreated biomass is further difficult to transport reliably, e.g. in order to use it as a partial or full scale feed for large scale electricity production instead of coal. Further, due to its relatively high water content and low bulk density it is expensive to transport over long distances. All this is made worse by the fact that the properties of untreated biomass are variable.

After torrefaction, the torrefied biomass is hydrophobic and has no biological activity. Further, the torrefied biomass is brittle, so that it may easily be milled and processed into constant quality pellets or briquettes, with an energy density that is significantly higher than that of untreated biomass. During optimal torrefaction, circa 10% of the energy content, in other words the energy to be obtained by complete combustion, is lost, and about 30% of the weight is lost, obviously depending on the moisture content of the starting material.

Traditionally, torrefaction is executed in an atmosphere free of oxygen. WO 2012158118 however describes torrefaction of a moving bed of biomass with above it a volume mainly consisting of reaction gas, which is a mixture of various gasses from the thermal decomposition, whereby oxygen is added to this volume above the biomass to combust the combustible gasses therein and thereby obtain additional heat to enhance heating of the biomass. US 2011/252698 A1 discloses a process for biomass torrefaction in a fluidized bed reactor. The present inventors have discovered that addition of oxygen to the reaction gas will indeed give rise to heating up this gas, but that, in the case that this combustion occurs above the bed, only a fraction of this heat is transferred to the biomass, so that this action is relatively inefficient for heating the biomass.

The obtained torrefied biomass from traditional methods of torrefaction also has as a disadvantage that it is pyrophoric, so that the torrefied biomass has to be treated with care and measures need to be taken to avoid fire and to deal with a fire should it occur. This means for example that further processing, such as milling and compaction, has to be done under a protective atmosphere.

In case the torrefied material is to be used as a fuel, which is usually the case, it is desirable to give sufficient thermal treatment to the biomass to obtain the desired brittleness and hydrophobicity, but not too much thermal treatment, meaning treatment at a temperature which is higher than needed for torrefaction, because excessive thermal treatment, or over-torrefaction, would cause the energy content to go down, in other words it would result in a loss of energy content of the material. For an optimal energetic yield it is therefore vital to have a precise temperature control of the biomass undergoing torrefaction.

The present inventors have discovered that the decomposition reactions during torrefaction, even in an oxygen free atmosphere, are very strongly temperature dependent. A small increase in temperature will lead to a very large increase in speed of torrefaction. This makes the above-mentioned desired temperature control even more important, as a minor transgression will have significant negative consequences.

The present inventors have further discovered that the decomposition reactions during torrefaction, even in an oxygen free atmosphere, can be strongly exothermic, at least for most types of biomass, leading to an uncontrolled temperature increase of 30 to 40 °C of the biomass undergoing torrefaction. This makes the above-mentioned desired temperature control in a torrefaction reactor particularly difficult to achieve so that thermal run-aways can easily occur causing massive over-torrefaction and even equipment damage.

Additionally, in order to balance the advantages of torrefaction and the loss of energy content, it is needed that the degree of torrefaction is homogeneous, both with respect to the degree of torrefaction of the various biomass particles as well as with respect to the outside and the inside of the particles.

Furthermore over-torrefaction is undesirable because over-torrefied biomass has a more charchoal-like character and is difficult to ignite and compress into pellets or briquettes, whereas correctly torrefied material, due to a large content of relatively volatile components, is much easier to ignite, and therefore much more attractive as fuel.

Whereas good temperature control may be achievable in small scale batch treatment of very fine biomass particles, good temperature control is much more difficult to achieve in a continuous industrial installation because of the limited possibilities for heating or cooling the reactor contents and because of the relatively large size of most biomass sources, typically one to ten centimetres, leading to heat transfer limitations between the biomass particle and the gas phase in the reactor.

Further, in industrial practice, feed materials of different origin, with different water contents and having different sizes, need to be easily processable.

WO 2012158116 discloses a method of torrefaction in which air is blown from the bottom through a vertically moving packed bed of pre-heated biomass, whereby the reaction of the air with the reaction gas resulting from the torrefaction heats the biomass undergoing torrefaction, and whereby the amount of air is used to control the temperature of the biomass.

WO 2012158116 however has the following disadvantages:
- There is only the possibility to control the temperature up, so towards a higher temperature. Due to the strong temperature dependence of the torrefaction there is therefore a significant risk of over-torrefaction.
- Due to the risk of exothermicity of the torrefaction reaction there is a significant risk of thermal run-aways.
- The biomass particles do not become homogeneously torrefied. Preferential gas channels will form in the packed bed, leading to inhomogeneous torrefaction: some particles of biomass, more particularly those near the air inlet and near these gas channels will be much more exposed to the air than others, so that some particles will be severely overtorrefied, whereas some particles will be undertorrefied.

The exact temperature of thermal treatment which is ideal for obtaining the advantages of torrefaction and limiting the loss of energy is somewhat different for every type of biomass, mainly due to differences in cellulose, hemi-cellulose and lignin content, the porosity and the content of inorganic atoms such as potassium. It can be checked by trial and error what the ideal thermal treatment temperature is for a specific biomass to best balance the advantages of torrefaction and the disadvantages of excessive torrefaction.

The goal of the invention is to reduce these and other problems by providing a method for torrefying optionally moist, biomass to produce torrefied biomass, whereby the method comprises a torrefaction step in which said biomass is thermally treated at a temperature between 220 °C and 330 °C in a reactor, whereby the biomass is present in said reactor as a bed of particles of biomass, whereby in the torrefaction step oxygen, either as pure oxygen or as a gas mixture containing oxygen, is injected into said reactor, whereby said oxygen is injected into said reactor underneath said bed or inside said bed whereby in the reactor the biomass is heated by means of heat transfer from an external heat source, meaning external to the reactor but not necessarily external to the method, through a reactor wall, whereby in the reactor the biomass is also heated by reaction with said oxygen, whereby an actual temperature of the biomass in said reactor is controlled to a target temperature, whereby the amount of oxygen that is injected is used for controlling said actual temperature to said target temperature.

In other words, the oxygen is injected at such a location that said bed is located between the inlet for oxygen and an outlet of the reactor for reaction gas.

Hereby there is a positive relation between the amount of oxygen injected and the parameter (target temperature minus actual temperature), so that in case the actual temperature is below the target temperature, more oxygen is injected, and in case the actual temperature reaches or exceeds the target temperature, the oxygen supply is strongly reduced or temporarily switched off.

The target temperature is in principle the above-mentioned ideal thermal treatment temperature for a specific biomass to best balance the advantages of torrefaction and the disadvantages of excessive torrefaction, although a small positive or negative correction may be applied to said ideal temperature by the process operator in defining the target temperature, depending on the position in the reactor where the actual temperature is measured and the safety margin the process operator wishes to use to ensure sufficient torrefaction. As will be explained later, the target temperature may be set at a higher value if needed to avoid supplying heat from external sources to the method. It should be stressed that the target temperature is determined externally to the invention.

The advantage of this method is that, due to more homogeneous heating of the biomass particles, a more homogeneous final product is obtained.

Preferably. said method is a continuous method, in other words said reactor is a continuous reactor, when considered with respect to the biomass.

An advantage is further that the thermally decomposing biomass is directly heated by reaction with the oxygen inside the bed or even within the pores of the biomass, so that the heating is much more efficient than in the known methods of heating the biomass.

Alternatively the invention can be defined as a method for torrefying biomass, preferably in a continuous process, to produce torrefied biomass, whereby the method comprises a torrefaction step in which said biomass is thermally treated at a temperature between 220 and 330 °C in order to thermally decompose hemicellulose present in the biomass, whereby the biomass is present in said reactor as a bed of particles of biomass, whereby above this bed there is a space containing reaction gas, meaning gaseous reaction products from the thermal treatment, and whereby in the torrefaction step oxygen is supplied to said reactor from outside said reactor, whereby said oxygen is supplied to said reactor underneath said bed or in said bed, so that said oxygen is contacted by said biomass before said oxygen enters said space above said bed, whereby said oxygen is supplied as pure oxygen or as a gas mixture containing oxygen, for example air, whereby in the reactor the biomass is heated by means of heat transfer from an external heat source through a reactor wall, whereby in the reactor the biomass is also heated by reaction with said oxygen, whereby an actual temperature of the biomass in said reactor is controlled to a target temperature, whereby the amount of oxygen that is injected is used for controlling said actual temperature to said target temperature.

In a further alternative the invention can be defined as a method for torrefying biomass to produce torrefied biomass in a continuous process, whereby the method comprises controlling a temperature of the biomass to a target temperature, whereby for controlling said temperature use is made simultaneously of a first method for controlling temperature and a second method for controlling temperature, whereby the first method comprises controlling the temperature of the biomass to a first temperature below said target temperature by means of heat transfer from a surface which is in contact with said biomass and which is in thermal contact with a hot medium which is physically separated from said biomass, whereby the second method comprises controlling said temperature from said first temperature to said target temperature by means of bringing the biomass in contact with a controlled amount of oxygen or an oxygen-containing gas to effect heating of the biomass.

Preferably, the oxygen or gas mixture containing oxygen should be injected at a relatively low velocity, to ensure sufficient residence time in the bed and to avoid that gas channels are formed by moving biomass particles in the gas. A contact time of the gas with the biomass of at least 0.5 seconds, preferably at least 1.0 second is desirable. Therefore, the preferred gas velocity at the inlet is at most 0.5 m/s and more preferably at most 0.3 m/s.

It is therefore preferable to use inlets with a multitude of holes spread or distributed over a relatively large area of the reactor wall.

Preferably, the flow directions of the biomass and the reaction gas are counter-current.

The biomass is heated in said reactor by means of said heat transfer to a first temperature below said target temperature, whereby said actual temperature is controlled from said first temperature to said target temperature by adjusting the quantity of oxygen that is injected per unit of time.

The difference between said target temperature and said first temperature is at least 5 °C and preferably at least 10 °C.

The difference between said target temperature and said first temperature is at most 40 °C and preferably at most 35 °C and most preferably at most 30 °C.

The inventors have discovered that the amount of oxygen that is injected allows a rapid and precise control of the actual temperature of the biomass in the reactor. Even at a temperature significantly, up to 30 °C or even more, below the target temperature, at which temperature no torrefaction would take place in the absence of oxygen, the injection of oxygen will start the desired torrefaction reaction, thereby at the same time increasing the temperature of the biomass towards the target temperature. The reverse is also true, even at or above the target temperature, the reduction of the oxygen supply will quickly reduce the reaction rate of the torrefaction reaction and thereby the temperature.

The exothermic effect of the torrefaction reaction can therefore be controlled by the oxygen supply to avoid or reduce the above mentioned undesired temperature increase of the torrefying biomass.

The preferred variant therefore has the advantage that the temperature of the biomass can be set by heat transfer through said reactor wall, at the lower side inside the temperature window within which the temperature of the biomass can subsequently be controlled by adjustments to the the oxygen flow rate.

Without being bound by theory the inventors consider the effect of the oxygen to be based on two different mechanisms: Firstly an intrinsically faster torrefaction reaction, at the same actual temperature, with oxygen present than without oxygen present, and secondly an increase in temperature due the torrefaction taking place which will lead to an increased reaction rate.

As a consequence, even if the exothermic effect is strong, control of the temperature by the oxygen supply is still possible.

In a preferred variant the temperature of said reactor wall is maintained at said first temperature, whereby the biomass is cooled by means of heat transfer from to said external heat source through said reactor wall. Said reactor wall can then also cool the biomass in case the biomass temperature needs to be reduced.

In a further preferred variant, the thermal energy required for the method, meaning all or substantially all, meaning at least 90%, preferably at least 98%, of this thermal energy, is supplied by combustion of part of the biomass which is treated in the method, whereby the reaction gas released during torrefaction is also considered part of this biomass as this reaction gas originates from the biomass.

The advantage is that no external source of thermal energy is needed , so that the method is, at least as far as thermal energy is concerned, self-sustaining, thereby saving significant amounts of expensive energy that would otherwise be required in the method.

In a preferred variant said target temperature is the higher of the temperature needed to obtain a target value of a property of the torrefied biomass and the temperature needed to obtain sufficient reaction gas for the combustion of this reaction gas to provide the thermal energy required in the method.

Such target value of a property of the torrefied biomass is for instance the weightloss compared to dry non-torrefied material, needed to obtain sufficient grindability and is determined externally to the invention based on economic considerations balancing the required ease of grinding and compaction with the desire to maximise the energy content, and will usually be different for biomass particles having different properties and/or different origins.

The advantage is that the method is always controlled so that there is sufficient thermal energy to be thermally self sustaining, even if this would mean producing somewhat over-torrefied biomass.

In a preferred variant the particles of biomass are mixed inside said reactor. This gives a more uniform exposure to heat and oxygen, ensuring more homogeneously torrefied biomass as final product. In a further preferred variant the particles of biomass are mechanically mixed inside said reactor, which means mixed by means of a moving mixing element.

In a preferred variant said biomass is moved in said reactor from a biomass inlet to a biomass outlet, whereby said oxygen is injected underneath said bed or inside said bed at two or more different positions along a direct path from said biomass inlet to said biomass outlet, whereby the largest distance between a pair of said two or more different positions is at least 15%, and preferably at least 33%, and more preferably at least 50% of the distance from the biomass inlet to the biomass outlet.

Preferably there are at least three such positions. Preferably the amount of oxygen injected at each individual of said positions is adjustable independently.

All these measures improve the possibilities to finely control the torrefaction process to obtain homogeneously torrefied biomass particles having the desired degree of torrefaction.

In a further preferred variant said oxygen is pre-heated before being injected into said reactor, preferably to a temperature higher than the temperature of the biomass at the position of injection minus 60 °C, and more preferably to a temperature higher than the temperature of the biomass at the position of injection minus 20 °C, and even more preferably to a temperature the same as or higher than the temperature of the biomass at the position of injection.

If not, the supply of relatively cold oxygen, and other gasses in case a mixture comprising oxygen is used, may cool the biomass to such an extent that the desired torrefaction reaction can not, or not sufficiently, occur.

In a preferred variant said biomass comprises one or more of the following materials, and preferably contains at least 75% by weight of one or more of the following materials and more preferably contains at least 75% by weight of one of the following materials: wood chips, in particular whole tree wood chips, gardening waste, waste from wood processing industry, reclaimed waste wood, meaning wood from demolished wooden structures, miscanthus, bamboo, grass, hay, maize stalks, straw, hemp, side products from coffee bean production, cocoa shells, plant seeds, coconut shell, agave plant parts, side products of bio-ethanol production, pseudo acacia, banagrass, sugar cane bagasse, mesquite .

In a further preferred variant said reactor is a continuous reactor, whereby said oxygen is injected into said reactor at a first, time averaged, flow rate, whereby said biomass is supplied to said reactor at a second, time averaged, flow rate, whereby the ratio of said first flow rate to said second flow rate is smaller than the ratio of oxygen to biomass needed to combust completely 5% by weight of the carbon present in said biomass, and preferably smaller than the ratio of oxygen to biomass needed to combust completely 3% by weight of the carbon present in said biomass, and more preferably smaller than the ratio of oxygen to biomass needed to combust completely 2% by weight of the carbon present in said biomass.

In a further preferred variant said reactor is a continuous reactor, whereby the torrefaction reaction results in a flow of reaction gas, whereby the ratio of the time averaged flow rate of said oxygen and the time averaged flow rate of reaction gas is at most 0.05 on a volume basis.

This way the mixture of oxygen and reaction gas can never become explosive, even if for some unexpected reason the oxygen does not react with the biomass or the reaction gas while passing through the bed of biomass.

Preferably, the biomass, immediately before entering the reactor, has a size distribution with 75 wt% or more between 3.15 mm and 100 mm, more preferably with 75 wt% or more between 3.15 mm and 63 mm and most preferably more preferably with 75 wt% or more between 3.15 mm and 45 mm, with all mentioned sizes being defined as determined by sieving on a sieve with openings of the particular size.

In a preferred variant the processing rate of biomass, as measured when entering the reactor, is 50 kg/hr or more.

In a further preferred variant the average residence time of the biomass in the reactor is between 60 seconds and 60 minutes.

In a further preferred variant the method additionally comprises a cooling step of the torrefied biomass, whereby the cooling step takes place after the torrefaction step, whereby in the cooling step oxygen, pure or as a gas mixture containing oxygen, is brought into contact with the biomass, whereby the amount of oxygen is less than is needed to combust completely 2.0% by weight of the carbon present in said biomass, and preferably less than is needed to combust completely 1.0 % by weight of the carbon present in said biomass.

This measure avoids that the resulting torrefied biomass is pyrophoric.

Hereby, preferably said oxygen is brought into contact with said biomass in said cooling step at a position where said biomass has a temperature of 180 °C or less and preferably of 150 °C or less.

In a further preferred variant, the method comprises a heating step of the biomass, whereby during the heating step the biomass is present in a pre-heater as a bed of particles of biomass, whereby in said pre-heater the biomass is heated to a temperature lower than said target temperature but higher than said target temperature minus 50 °C, whereby the heating step takes place before the torrefaction step, and preferably outside the torrefaction reactor in order to use the reactor for the actual torrefaction, whereby oxygen is supplied to the biomass during the heating step whereby said oxygen enters said pre-heater underneath said bed or inside said bed.

In the pre-heater water is expelled from the biomass, and the biomass is at the same time heated to a temperature somewhat below the target temperature, typically 10 to 50 °C below the target temperature.

As above, oxygen is hereby injected as pure oxygen or as a gas mixture containing oxygen, for example air.

The advantage is that, due to the fact that some of the gasses escaping from the biomass during a combined drying and heating step are combustible, injecting oxygen at the specified position, will cause these gasses to be combusted inside the bed of biomass thereby heating the biomass directly. This way less energy is used for drying and heating, and more biomass can be heated in the same pre-heater volume.

The oxygen should not be significantly colder than the biomass, otherwise the biomass will be cooled, instead of heated, by the supply of oxygen. Therefore, preferably, the oxygen is pre-heated to at least 120 °C and more preferably to at least 150 °C and most preferably to at least the temperature of the biomass at the position where the oxygen is injected minus 20 °C.

Preferably, the flow directions of the biomass and of the gas mixture resulting from drying are co-current.

Further disclosed is an installation for torrefying biomass in a continuous process to produce torrefied biomass, whereby the installation comprises a reactor, whereby the installation is configured to heat the reactor to a temperature between 220 °C and 330 °C, whereby the installation is configured to supply a hot fluid to the outside of a wall of said reactor and thereby heat said reactor, whereby the torrefaction reactor has at least one inlet configured to supply an adjustable flow of oxygen, either as pure oxygen or as a gas mixture containing oxygen, to the reactor, whereby said at least one inlet is positioned in the lower 33% of said reactor, and preferably in the lower 25% of of said reactor, whereby the installation is configured to measure an actual temperature of material inside said reactor. During operation as foreseen this material inside the reactor is of course biomass.

The lower 33% or lower 25% are the height to which during use the reactor is filled with particles of biomass

Such an installation allows control of the temperature of the material in the reactor by means of adjustments to the flow of oxygen, and thereby is ideally suited for execution of the method according to the invention

Preferably, the installation is provided with an automatic control unit to adjust the flow of oxygen based on the temperature that is measured.

In an alternative an installation can be defined as an installation for torrefying biomass in a continuous process to produce torrefied biomass, whereby the installation is provided with at least two control means for controlling a temperature of the biomass, whereby said two control means are operable simultaneously, whereby the first control means of said two control means is arranged to bring biomass being treated to a first temperature below said target temperature by means of heat transfer from a surface which is in physical contact with the biomass and which is in thermal contact with a hot medium which is physically separated from the biomass, whereby the second control means of said two control means is arranged to control the temperature of the biomass from said first temperature to said target temperature by bringing a controlled amount of oxygen or an oxygen-containing gas into contact with the biomass to effect heating of the biomass. In a preferred embodiment the reactor is a tubular reactor having a cylindrical reactor wall, whereby the at least one inlet for oxygen is formed by one or more perforations in the cylindrical reactor wall.

In a preferred embodiment the reactor is a tubular reactor extending in a horizontal direction or in a direction deviating 30° or less from a horizontal direction whereby said reactor is provided with a mechanical means for moving biomass inside said reactor from an entrance of said reactor to an exit of said a reactor.

In another preferred embodiment said reactor is provided with a mechanical means for mixing particles of biomass inside said reactor. Preferably the mechanical means from the last two preferred embodiments are the same means, and more preferably this means is an auger.

In a preferred embodiment said reactor has a biomass inlet and a biomass outlet, whereby said reaction has at least two such inlets configured to supply oxygen, whereby these inlets configured to supply oxygen are placed at different positions along a direct path from said biomass inlet to said biomass outlet, whereby the largest distance between a pair of said at least two inlets configured to supply oxygen is at least 15%, and preferably at least 33%, and more preferably at least 50%, of the distance from the biomass inlet to the biomass outlet.

Preferably there are at least three such inlets. Preferably the inlets are configured to supply an adjustable flow of oxygen, whereby the amount of oxygen supplied at each individual of said inlets is independently adjustable.

In a preferred embodiment said reactor is a continuous reactor with respect to the biomass, meaning a reactor that is arranged to treat a flow of biomass.

In a further preferred embodiment the installation comprises a cooler for torrefied biomass, whereby the cooler has at least one inlet which is configured, to supply oxygen, either as pure oxygen or as a gas mixture containing oxygen, to the interior of the cooler, whereby preferably the cooler is a tubular cooler extending in a horizontal direction or in a direction deviating 30° or less from a horizontal direction.

This allows an oxygen treatment of the cooling torrefied biomass to take place so that its pyrophoricity is reduced.

In a preferred embodiment the reactor is provided with a gas outlet, whereby the installation comprises a combustion unit, whereby the gas outlet is connected to the combustion unit to allow gas from the gas outlet to be fed to said combustion unit for combustion, whereby said combustion unit is configured to produce a hot fluid and has an outlet for said hot fluid, whereby said outlet for said hot fluid is connected to said reactor so that the outside of said wall of said reactor can be heated by said hot fluid.

This way the heat required for externally heating the reaction can be supplied by combusting the gasses resulting from the torrefaction reaction.

Preferably said hot fluid is hot combustion gas from said combustion unit.

In a preferable embodiment the installation comprises a pre-heater for heating biomass to be torrefied, whereby said outlet for said hot fluid is connected to said pre-heater so that a wall of said pre-heater can be heated by said hot fluid.

In yet a further preferred embodiment the installation comprises a pre-heater for heating biomass to be torrefied, whereby the pre-heater has at least one inlet configured to supply oxygen, either as pure oxygen or as a gas mixture containing oxygen, to the pre-heater.

In yet a further preferred embodiment, the installation has a joint exhaust for gasses from the pre-heater and for gasses from the reactor, whereby there is a connection between the pre-heater and the reactor to allow biomass transport from the pre-heater to the reactor, whereby the joint exhaust is placed at this connection.

Note that in the above an inlet configured to supply oxygen preferably means an inlet connected to a supply of oxygen or oxygen containing gas and otherwise configured to allow injection of a gas flow from said supply to the mentioned component of the installation.

The installation is particularly suited for performing the method according the invention.

The invention further concerns the method according to any of the variants described above executed in an installation according to any of the embodiments described above.

The feature of supplying oxygen to the torrefied biomass during cooling in order to reduce the pyrophoricity of the biomass is also beneficial in traditional torrefaction, so irrespectively of how the torrefaction reaction is executed. This feature may therefore also be defined by the following clauses.

In order to better explain the invention, the following figures are provided, in which:
figure 1 schematically shows a method and installation according to the invention; and
figure 2 schematically shows a cross-section of a part of the installation of figure 1 according to II-II.

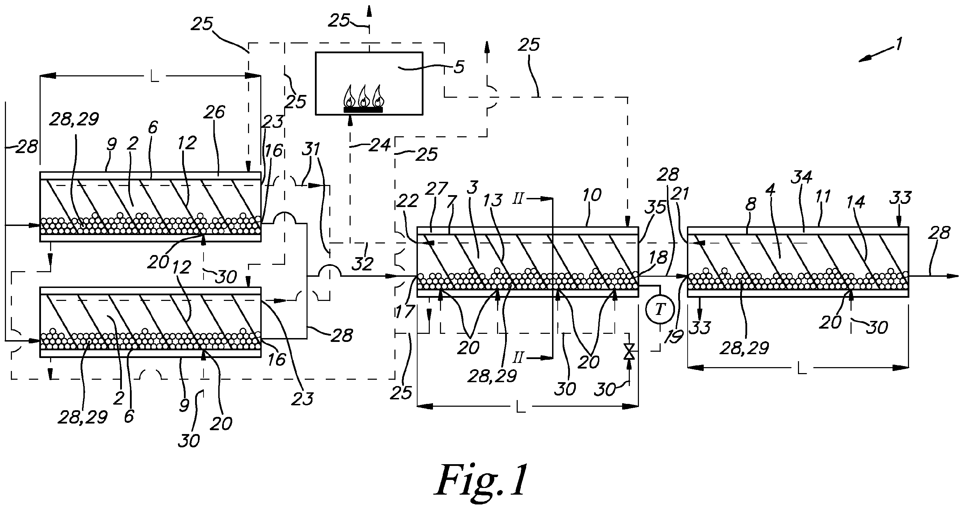

The installation 1 of figure 1 comprises as main components two pre-heaters 2, a reactor 3, a cooler 4 and a combustion unit 5. The pre-heaters 2, reactor 3 and cooler 4 are are all executed as double walled tubes with an inner tube 6,7,8 and an outer tube 9, 10, 11. The pre-heaters 2, reactor 3 and cooler 4 are each provided with an internal rotating auger 12, 13, 14 for transport of biomass inside the inner tubes 6,7,8, whereby said augers 12, 13, 14 are arranged to transport biomass in the direction left to right in figure 1.

The length L of the pre-heaters 2, reactor 3 and cooler 4 is circa 9.5 m, with a diameter D1 of the inner tubes 6,7,8 of circa 81 cm and a diameter D2 of the outer tube 8,10, 11 of circa 91 cm.

The two pre-heaters 2 are arranged in parallel. Their outlets 16 for biomass are combined and connected to the inlet 17 of the reactor 3. The outlet 18 for biomass of the reactor 4 is connected to the inlet 19 of the cooler 4.

In the reactor 3, inlets 20 for air are provided. In this case but not necessarily the number of inlets 20 is four. The mutual distance between the inlets 20 is circa 2 m.

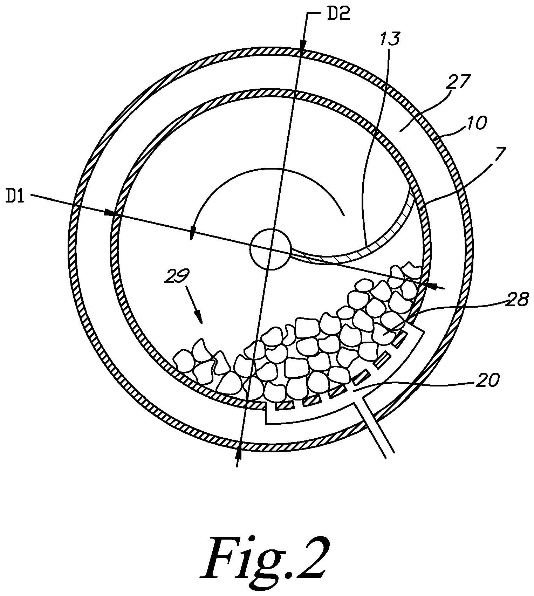

These inlets 20 are shown in detail in figure 2. They are each formed by a set of holes arranged in a regular pattern in a circular or rectangular area with a diameter or size of circa 30 cm. The centre of the inlets is placed circa 30° from the bottom of the reactor 2. The reason for this is that the auger 13 will give an angular deflection to the biomass during use. By moving the inlets 20 slightly away from the lowest point of the reactor 3, the inlets 20 are approximately placed where the biomass thickness is highest during use of the installation 1.

In the cooler 4 and each of the pre-heaters 2 a single, similar, inlet 20 for air is provided, in this case, but not necessarily, approximately at half the length of the pre-heaters 2 and cooler 4.

In the upper part of the cooler 4 a gas outlet 21 is provided, which is connected to a gas inlet 35 of the reactor 3. On the other side of the reactor 3 a gas outlet 22 is provided.

The two pre-heaters 2 are each provided with a gas outlet 23 in their upper part. These two gas outlets 23 are connected to the gas outlet 22 of the reactor 3 and are connected to the combustion unit 5 via a joint exhaust 24.

The combustion unit 5 is arranged to produce hot combustion gas 25. The outlet for hot combustion gas 25 of the combustion unit 5 is connected to the spaces 26, 27 between the double tubes of the pre-heaters 2 and the reactor 3. Water injection points for cooling the combustion gas 25 if needed are provided but not represented in figure 1.

Biomass 28 may be torrefied in this installation as follows:
The biomass 28 used in this example is wood chips of beech wood, pre-dried to a water level of circa 14% by weight, and having a size classification of P45, meaning at least 75 weight % between 3.15 mm and 45 mm, and at most 12 wt% below 3.15 mm. It has been previously determined that this material needs to be exposed to a temperature of 280 °C to obtain sufficient torrefaction. This is therefore the target temperature of the biomass 28 at the end of the reactor 3. From previous experience it is known that torrefaction at this temperature will produce more than sufficient torrefaction gas to allow the combustion of this torrefaction gas to supply all thermal energy needed for the torrefaction reaction.

The biomass 28 is present in the pre-heaters 2, reactor 3 and cooler 4, as a moving bed 29 of biomass particles.

A feed of 1600 kg/hr of this biomass 28 is fed into each of the pre-heaters 2. The pre-heaters are heated by hot combustion gas 25 coming from the combustion unit 5 having a temperature of circa 700 °C. This hot combustion gas 25 is injected in the space 26 between the two tubes 6,9 of the pre-heaters, and leaves this space 26 at a temperature of circa 400 °C.

The speed of the auger 12 is arranged so that the residence time of the biomass 28 in the dryers is circa 10 minutes.

The biomass 28 heats up during its passage through the pre-heaters 2 to a temperature of circa 240 °C. This is mainly caused by heat exchange with the inner tube 6 of the pre-heaters 2, either directly or via the gas phase or via radiation, but partly also due to the injection of 240 kg/hr of air 30, so 120 kg/hr per pre-heater 2. This air 30 is preheated to circa 180 °C and is introduced through the inlet 20 into the pre-heaters 2 underneath the beds 29 of biomass 28, at the position where the temperature of the biomass 28 is also approximately 180 °C.

During the heating the biomass 28 releases free water, chemisorbed water and physisorbed water.

Towards the higher end of the temperature range in the pre-heater 2, the biomass 28 already releases combustible gasses, which are combusted, mainly already while still inside the bed 29 of biomass 28, by the oxygen present in the injected air 30, leading to a rapid increase of the bed temperature.

The gas mixture 31 resulting from drying is flowing in a co-current fashion with the biomass 29, and exits the reactor at the gas outlets 23, from where this gas mixture 31 is led further via the exhaust 24 to the combustion unit 5.

At the end of the pre-heaters 2 the dried and pre-heated biomass 29 is transferred into the reactor 3. This may be done by gravity or by any transport screw suitable for transporting particulate material.

In the reactor 3 the biomass 28 is transported by the auger 13. The residence time of the biomass 28 in the reactor 3 is circa 5 minutes. The final temperature of the biomass 28 in the reactor is the above-mentioned 280 °C. The auger 13 also causes mixing of the biomass 28 with biomass 28 having the same or approximately the same horizontal position inside the reactor 3.

This final temperature is reached by a combinations of two methods

Firstly, hot combustion gas 25, cooled to a temperature of 265 °C by means of water injection is injected in the space 27 between the two tubes 7,10 of the reactor 3.

Secondly, the temperature of the biomass 28 near the biomass outlet 18 of the reactor 3 is measured, and air 30 is injected simultaneously through the four inlets 20 of the reactor 3 to control this measured temperature to 280 °C, whereby more air 30 is injected the further this temperature is below 280 °C, causing a rise in temperature of the biomass 28, and no air is injected if this temperature is above 280 °C, causing the temperature to become lower. In practice a time averaged air flow rate of circa 60 kg/hr is needed to achieve this.

The air 30 flows through the bed 29 of biomass 28, at the same time reacting with the biomass 28. The air 30 speeds up the torrefaction reaction by reaction of the oxygen in the air 30 inside the bed 29, thereby also further heating the biomass 28 exactly where it is needed. The reaction gas then flows to the space above the bed 29 of biomass 28.

The injected air 30 is preheated to 280 °C.

It should be noted that, in case the other process parameters such as type of feed material, feed rate, combustion gas flowrate and temperature are the same, the target temperature of 280 °C can not be reached without injection of air 30.

The gas mixture 32 produced in the reactor 3 by the torrefaction reaction flows to the gas outlet 22 of the reactor in a counter-current fashion compared to the biomass 28, from where it is led via the joint exhaust 24 to the combustion unit 5. The biomass 29 passes through this hot gas mixture 32 when passing from the pre-heaters 2 to the reactor 3, thereby picking up some extra heat.

Upon exiting the reactor 3 the biomass 28, which is now torrefied, is led into the cooler 4. Cooling water 33 is pumped through the space 34 between the two tubes 8,11 of the cooler 4.

In the cooler 4 the biomass 28 is transported by the auger 14. The residence time of the biomass 28 in the cooler 4 is approximately 10 minutes but may be adjusted such that a final temperature of the biomass 28 of 120 °C is reached.

In the air inlet 20 of the cooler 4 circa 40 kg/hr of air 30 is injected. This air 30 reacts with active sites on the surface of the torrefied biomass 28, in order to avoid pyrophoricity. The air 30 is injected at the point where the temperature of the torrefied biomass 28 is circa 180 °C.

At the end of the process circa 2100 kg/hr of final product, which is cooled, torrefied biomass 28, is obtained. This material is non-pyrophoric, and may be stored without risk of biological decompositions, and can be easily milled to any required size.

The collected gasses 31, 32 in the exhaust 24 are led to the combustion unit 5 where they are combusted with air, in order to produce hot combustion gas 25.

This hot combustion gas 25 is partly used for heating purposes of the reactor 3 and the pre-heaters 2 as described above. The excess combustion gas 25 is vented to the atmosphere. The combustion gas, after being used to heat the reactor 3 and the pre-heaters 2, is also vented to the atmosphere.

Based on the thermal requirements and flowrate of the biomass, the temperature and flowrate of the combustion gas 25 are determined and set. These can be changed and used to control the various temperatures of the biomass in the installation 1, should this be needed, but this control is relatively slow. The flowrate of air 30 to the pre-heaters 2 can be used as a much quicker control means to obtain the desired temperature of the biomass 28 in the pre-heaters 2.

During start-up of the installation 1 additional carburant, eg natural gas, may be supplied to the combustion unit 5. During regular operation no external carburant needs to be supplied, because the thermal energy requirements are met by combustion of the torrefaction gasses 31, 32.

The combustion unit 5 is provided with a pilot flame, for safety reasons preferably a double pilot flame, fuelled by an external fuel source, e.g. natural gas.

The air 30 which is injected into the pre-heaters 2 and reactor 3 is preheated by heat exchange with the combustion gas 25 from the combustion unit 5. This is not represented in figure 1. Other methods of preheating this air 30 are obviously also possible.

Even though in the figures and the description above only a single control circuit for the air 30 injected into the reactor 3 is described, obviously this can be refined by performing a temperature measurement after every air inlet 20 of the reactor 3 and then individually adjusting the individual air flows at each inlet 20.

Temperature measurement of the reactor contents of a tubular reactor with an auger, as needed in case the temperature needs to be measured after every air inlet, can be performed by having temperature measurement probes protruding inside the reactor from the reactor wall and removing a corresponding part of the auger at the position of these probes.

Further, the number of air inlets 20 in the reactor 3 may be increased, and also in the pre-heaters 2, for more precise control of the temperatures of the biomass 28 in the installation 1.

Obviously the rotational speed of the various augers is set at such a level that a desired residence time in the pre-heaters 2, reactor 3 and cooler 4 is obtained. The rotational speed of the augers may be adapted as a fast response if problems with product quality are observed, eg insufficient, excessive or inhomogeneous torrefaction.

## Claims

1. Method for torrefying biomass (28) to produce torrefied biomass (28), whereby the method comprises a torrefaction step in which said biomass (28) is thermally treated at a temperature between 220 °C and 330 °C in a reactor (3), whereby the biomass (28) is present in said reactor (3) as a bed (29) of particles of biomass (28), whereby in the torrefaction step oxygen (30), either as pure oxygen or as a gas mixture containing oxygen, is injected into said reactor (3), whereby said oxygen (30) is injected into said reactor (3) underneath said bed (28) or inside said bed (28), whereby in the reactor (3) the biomass (28) is heated by means of heat transfer from an external heat source (25) through a reactor wall (7), whereby in the reactor (3) the biomass (28) is also heated by reaction with said oxygen (30), whereby an actual temperature of the biomass (28) in said reactor (3) is controlled to a target temperature, whereby the amount of oxygen (30) that is injected is used for controlling said actual temperature to said target temperature, whereby the biomass (28) is heated by means of said heat transfer to a first temperature below said target temperature, whereby said actual temperature is controlled from said first temperature to said target temperature by adjusting the quantity of oxygen (30) that is injected, wherein the difference between said target temperature and said first temperature is at least 5 °C and at most 40 °C.

2. Method according to claim 1, whereby said reactor is a continuous reactor, and whereby said particles of biomass (28) are mechanically mixed inside said reactor (3).

3. Method according to any of the previous claims, whereby the thermal energy required for the method is supplied by partial combustion of said biomass (28).

4. Method according to any of the previous claims, whereby said target temperature is the higher of the temperature needed to obtain a target value of a property of the torrefied biomass and the temperature needed to obtain sufficient reaction gas for the combustion of this reaction gas to provide the thermal energy required in the method.

5. Method according to any of the previous claims, whereby the torrefaction reaction results in a flow of reaction gas, whereby the ratio of the time averaged flow rate of said oxygen (30) and the time averaged flow rate of reaction gas is at most 0.05 on a volume basis.

6. Method according to any of the previous claims, whereby the method comprises a cooling step of the biomass (28), whereby the cooling step takes place after the torrefaction step, whereby in the cooling step oxygen (30), either as pure oxygen or as a gas mixture containing oxygen, is brought into contact with the biomass (28), whereby the amount of oxygen (30) that is brought into contact with the biomass in the cooling step, is less than is needed to combust 2.0% by weight of the carbon present in said biomass (28).

7. Method according to any of the previous claims, whereby said biomass (28) is moved in said reactor from a biomass inlet (17) to a biomass outlet (18), whereby said oxygen (30) is injected underneath said bed (28) or inside said bed (28) at two or more different positions (20) along a direct path from said biomass inlet (17) to said biomass outlet (18), whereby the distance between the position (20) of injection closest to the biomass inlet (17) and the position (20) of injection closest to the biomass outlet (18) is at least 33% of the distance from the biomass inlet (17) to the biomass outlet (18).

## Patentansprüche

1. Verfahren zum Rösten von Biomasse (28) zur Herstellung von gerösteter Biomasse (28), wobei das Verfahren einen Röstschritt umfasst, bei dem die Biomasse (28) bei einer Temperatur zwischen 220 °C und 330 °C in einem Reaktor (3) wärmebehandelt wird, wobei die Biomasse (28) in dem Reaktor (3) als Bett (29) von Partikeln von Biomasse (28) vorliegt, wobei bei dem Röstschritt Sauerstoff (30), entweder als reiner Sauerstoff oder als Gasgemisch, das Sauerstoff enthält, in den Reaktor (3) eingeblasen wird, wobei der Sauerstoff (30) unterhalb des Betts (28) oder innerhalb des Betts (28) in den Reaktor (3) eingeblasen wird, wobei in dem Reaktor (3) die Biomasse (28) durch Wärmeübertragung von einer externen Wärmequelle (25) durch eine Reaktorwand (7) erhitzt wird, wobei in dem Reaktor (3) die Biomasse (28) auch durch Reaktion mit dem Sauerstoff (30) erhitzt wird, wobei eine tatsächliche Temperatur der Biomasse (28) in dem Reaktor (3) auf eine Zieltemperatur gesteuert wird, wobei die Menge an eingeblasenem Sauerstoff (30) zum Steuern der tatsächlichen Temperatur auf die Zieltemperatur verwendet wird, wobei die Biomasse (28) durch die Wärmeübertragung auf eine erste Temperatur unterhalb der Zieltemperatur erhitzt wird, wobei die tatsächliche Temperatur durch Einstellen der Menge an eingeblasenem Sauerstoff (30) von der ersten Temperatur auf die Zieltemperatur gesteuert wird, wobei der Unterschied zwischen der Zieltemperatur und der ersten Temperatur wenigstens 5 °C und höchstens 40 °C beträgt.

2. Verfahren gemäß Anspruch 1, wobei der Reaktor ein kontinuierlicher Reaktor ist und wobei die Partikeln von Biomasse (28) in dem Reaktor (3) mechanisch gemischt werden.

3. Verfahren gemäß einem der vorstehenden Ansprüche, wobei die für das Verfahren benötigte Wärmeenergie durch teilweise Verbrennung der Biomasse (28) geliefert wird.

4. Verfahren gemäß einem der vorstehenden Ansprüche, wobei die Zieltemperatur die höhere von der Temperatur, die zum Erhalten eines Zielwerts einer Eigenschaft der gerösteten Biomasse erforderlich ist, und der Temperatur, die zum Erhalten von ausreichend Reaktionsgas für die Verbrennung dieses Reaktionsgases zum Liefern der bei dem Verfahren benötigten Wärmeenergie erforderlich ist, ist.

5. Verfahren gemäß einem der vorstehenden Ansprüche, wobei die Röstreaktion einen Strom von Reaktionsgas liefert, wobei das Verhältnis der zeitgemittelten Flussrate des Sauerstoffs (30) und der zeitgemittelten Flussrate von Reaktionsgas höchstens 0,05 auf Volumenbasis beträgt.

6. Verfahren gemäß einem der vorstehenden Ansprüche, wobei das Verfahren einen Kühlschritt der Biomasse (28) umfasst, wobei der Kühlschritt nach dem Röstschritt erfolgt, wobei bei dem Kühlschritt Sauerstoff (30), entweder als reiner Sauerstoff oder als Gasgemisch, das Sauerstoff enthält, in Kontakt mit der Biomasse (28) gebracht wird, wobei die Menge an Sauerstoff (30), die bei dem Kühlschritt mit der Biomasse in Kontakt gebracht wird, kleiner ist, als zum Verbrennen von 2,0 Gew.-% des in der Biomasse (28) vorhandenen Kohlenstoffs erforderlich ist.

7. Verfahren gemäß einem der vorstehenden Ansprüche, wobei die Biomasse (28) in dem Reaktor von einem Biomasseeinlass (17) zu einem Biomasseauslass (18) bewegt wird, wobei der Sauerstoff (30) unterhalb des Betts (28) oder innerhalb des Betts (28) an zwei oder mehr verschiedenen Positionen (20) entlang eines direkten Wegs von dem Biomasseeinlass (17) zu dem Biomasseauslass (18) eingeblasen wird, wobei der Abstand zwischen der Position (20) des Einblasens am nächsten bei dem Biomasseeinlass (17) zu den Position (20) des Einblasens am nächsten bei dem Biomasseauslass (18) wenigstens 33 % des Abstands von dem Biomasseeinlass (17) zu dem Biomasseauslass (18) beträgt.

## Revendications

1. Procédé destiné à torréfier de la biomasse (28) pour produire de la biomasse torréfiée (28), le procédé comprenant une étape de torréfaction dans laquelle ladite biomasse (28) est traitée thermiquement à une température comprise entre 220 °C et 330 °C dans un réacteur (3), la biomasse (28) étant présente dans ledit réacteur (3) sous la forme d'un lit (29) de particules de biomasse (28), dans lequel, à l'étape de torréfaction, de l'oxygène (30), sous la forme d'oxygène pur ou d'un mélange gazeux contenant de l'oxygène, est injecté à l'intérieur dudit réacteur (3), ledit oxygène (30) étant injecté à l'intérieur dudit réacteur (3) sous ledit lit (28) ou à l'intérieur dudit lit (28), dans lequel, dans le réacteur (3), la biomasse (28) est chauffée par transfert de chaleur depuis une source de chaleur externe (25) à travers une paroi de réacteur (7), la biomasse (28) dans le réacteur (3) étant également chauffée par réaction avec ledit oxygène (30), dans lequel une température réelle de la biomasse (28) dans ledit réacteur (3) est régulée jusqu'à une température cible, la quantité d'oxygène (30) qui est injectée étant utilisée pour réguler ladite température réelle jusqu'à ladite température cible, dans lequel la biomasse (28) est chauffée par ledit transfert de chaleur jusqu'à une première température inférieure à ladite température cible, dans lequel ladite température réelle est régulée depuis ladite première température jusqu'à ladite température cible par réglage de la quantité d'oxygène (30) qui est injectée, la différence entre ladite température cible et ladite première température étant d'au moins 5 °C et au plus 40 °C.

2. Procédé selon la revendication 1, dans lequel ledit réacteur est un réacteur continu, et dans lequel lesdites particules de biomasse (28) sont mélangées mécaniquement à l'intérieur dudit réacteur (3).

3. Procédé selon l'une quelconque des revendications précédentes, l'énergie thermique nécessaire pour le procédé étant fournie par combustion partielle de ladite biomasse (28).

4. Procédé selon l'une quelconque des revendications précédentes, dans lequel ladite température cible est la température la plus haute entre la température nécessaire pour obtenir une valeur cible d'une propriété de la biomasse torréfiée et la température nécessaire pour obtenir suffisamment de gaz de réaction pour la combustion de ce gaz de réaction pour fournir l'énergie thermique nécessaire dans le procédé.

5. Procédé selon l'une quelconque des revendications précédentes, dans lequel la réaction de torréfaction se traduit par un écoulement de gaz de réaction, le rapport entre le débit moyen dans le temps dudit oxygène (30) et le débit moyen dans le temps de gaz de réaction étant de 0,05 maximum en volume.

6. Procédé selon l'une quelconque des revendications précédentes, le procédé comprenant une étape de refroidissement de la biomasse (28), l'étape de refroidissement ayant lieu après l'étape de torréfaction, dans lequel, à l'étape de refroidissement, de l'oxygène (30), sous la forme d'oxygène pur ou d'un mélange gazeux contenant de l'oxygène, est mis en contact avec la biomasse (28), la quantité d'oxygène (30) qui est mise en contact avec la biomasse à l'étape de refroidissement étant inférieure à celle nécessaire pour brûler 2,0 % en poids du carbone présent dans ladite biomasse (28).

7. Procédé selon l'une quelconque des revendications précédentes, dans lequel ladite biomasse (28) est déplacée dans ledit réacteur depuis une entrée de biomasse (17) jusqu'à une sortie de biomasse (18), dans lequel ledit oxygène (30) est injecté sous ledit lit (28) ou à l'intérieur dudit lit (28) à au moins deux positions différentes (20) le long d'un trajet direct de ladite entrée de biomasse (17) à ladite sortie de biomasse (18), dans lequel la distance entre la position (20) d'injection la plus proche de l'entrée de biomasse (17) et la position (20) d'injection la plus proche de la sortie de biomasse (18) est égale à au moins 33 % de la distance de l'entrée de biomasse (17) à la sortie de biomasse (18).
